# EUROPEAN PATENT APPLICATION

(11) **EP 4 406 679 A1**
(43) Date of publication of application: **31.07.2024**
(21) Application number: 24150579.1
(22) Date of filing: 05.01.2024
(51) Int. Cl.: B23B 35/00, B23B 47/34, B23Q 5/32

(54) **SYSTEM AND METHOD FOR DRILLING A WORKPIECE**

(30) Priority: 27.01.2023 US 202318160399
(71) Applicant: The Boeing Company, Arlington, VA 22202 (US)
(72) Inventor: VALERIANO JR., Voltaire F, Arlington, 22202 (US); CHU, Milton J, Arlington, 22202 (US); HOANG, Luan K, Arlington, 22202 (US); BARTL, Andreas, Arlington, 22202 (US); WEBER, Tobias, Arlington, 22202 (US); BLANCO DEL ALAMO, Jose A, Arlington, 22202 (US); REIMERTZ, Samuel C, Arlington, 22202 (US); CHAN, Kwok Tung, Arlington, 22202 (US); ALBRECHT, Mark E, Arlington, 22202 (US)
(74) Representative: St Clair Jones, Gregory Arthur Langley

(57) **Abstract**

A computer-implemented drilling method includes steps of: (1) drilling a workpiece using a power drill; advancing the power drill along a feed axis according to a numerically controlled axial feed rate using a tool drive; and (3) inducing a numerically controlled oscillating motion of the power drill using the tool drive that is superimposed over the numerically controlled axial feed rate.

## Description

### FIELD

The present disclosure relates generally to machining operations and, more particularly, to systems and methods for automated drilling using vibration assisted drilling.

### BACKGROUND

In many industries, the use of assemblies that include a combination of metallic materials and non-metallic materials is significantly increasing. For example, in the aircraft industry, a combination of a metallic material and a composite material provide advantages in weight and mechanical properties. However, machining such material combinations can be challenging due to the different material characteristics. For example, a drilling process is particularly challenging because drilling properties must change through a single drilling procedure. Accordingly, those skilled in the art continue with research and development efforts in the field of automated drilling.

### SUMMARY

Disclosed are examples of an automated drilling system, a computer-implemented automated drilling method, a controller for an automated drilling system; and a computer program product. The following is a non-exhaustive list of examples, which may or may not be claimed, of the subject matter according to the present disclosure.

In an example, the disclosed system includes a power drill and a tool drive that is coupled to the power drill. The tool drive is configured to move the power drill along a feed axis. The system also includes a controller programmed with instructions that cause the controller to: (1) advance the power drill along the feed axis according to a numerically controlled axial feed rate; and (2) induce a numerically controlled oscillating motion superimposed over the numerically controlled axial feed rate.

In an example, the disclosed method includes steps of: (1) drilling a workpiece; (2) advancing along a feed axis according to a numerically controlled axial feed rate; and (3) inducing a numerically controlled oscillating motion superimposed over the numerically controlled axial feed rate.

In an example, the disclosed controller is programmed with instructions that, when executed by the controller, causes the controller to perform operations including: (1) advancing a power drill along a feed axis according to a numerically controlled axial feed rate; and (2) inducing a numerically controlled oscillating motion superimposed over the numerically controlled axial feed rate.

In an example, the disclosed computer program product includes a non-transitory computer-readable medium storing program code that, when executed by a processor, causes the processor to perform operations including: (1) advancing a power drill along a feed axis according to a numerically controlled axial feed rate; and (2) inducing a numerically controlled oscillating motion superimposed over the numerically controlled axial feed rate.

Other examples of the automated drilling system, the automated drilling method, the controller, and the computer program product disclosed herein will become apparent from the following detailed description, the accompanying drawings, and the appended claims.

### BRIEF DESCRIPTION OF THE DRAWINGS

Fig. 1 is a schematic block diagram of an example of an automated drilling system;
Fig. 2 is a schematic, perspective view of an example of a portion of the automated drilling system;
Fig. 3 is a schematic, exploded view of an example of a portion of the automated drilling system;
Fig. 4 is a schematic, section view of an example of a power drill of the automated drilling system;
Fig. 5 is a method flow diagram of an example of a computer implemented automated drilling method;
Fig. 6 is a graphical illustration of an example of a numerically controlled axial feed rate of a numerically controlled feed profile of the automated drilling system;
Fig. 7 is a graphical illustration of an example of a numerically controlled oscillating motion superimposed over the numerically controlled axial feed rate;
Fig. 8 is a graphical illustration of an example of a numerically controlled oscillating feed profile of the automated drilling system;
Fig. 9 is a graphical illustration of an example of a vibration assisted drilling operation;
Fig. 10 is a graphical illustration of an example of a numerically controlled feed profile of the automated drilling method;
Fig. 11 is a schematic illustration of an example of a portion of the automated drilling system and a workpiece;
Figs. 12-17 schematically illustrate stages of an example of the computer implemented automated drilling method;
Figs. 18-23 schematically illustrate stages of an example of the computer implemented automated drilling method;
Figs. 24-30 schematically illustrate stages of an example of the computer implemented automated drilling method;
Figs. 31-37 schematically illustrate stages of an example of the computer implemented automated drilling method;
Fig. 38 is a schematic block diagram of an example of a data processing system;
Fig. 39 is a flow diagram of an example of an aircraft manufacturing and service method; and
Fig. 40 is a schematic block diagram of an example of an aircraft.

### DETAILED DESCRIPTION

The present disclosure recognizes that control of chip formation is important to a drilling process in order to properly extract debris, to manage heat buildup, and to maintain hole quality. One solution used to control chip generation is to partially retract the cutting tool from the hole during the drilling procedure, referred to a peck drilling or pecking. However, peck drilling increases cycle time and is susceptible to debris packing in the flutes of the cutting tool and entanglement around the cutting tool, which can result in hole quality issues. Another solution is a form of oscillatory drilling referred to as "vibration assisted" drilling in which an oscillatory motion is used to create an intermittent cutting state. However, vibration assisted drilling requires costly integration of dedicated vibration assisted drills that utilize internal actuators to drive high frequency and low amplitude oscillations of the spindle.

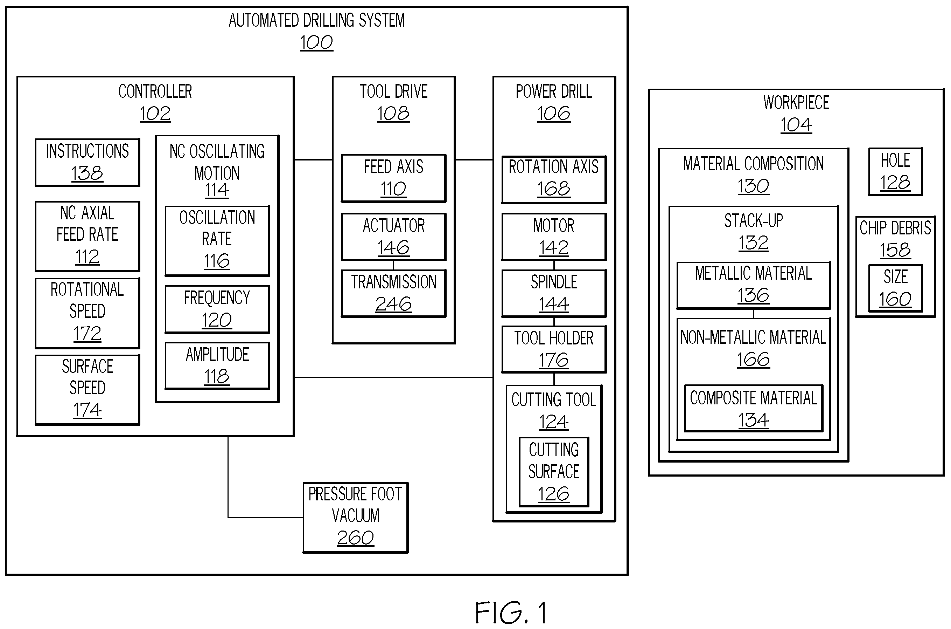

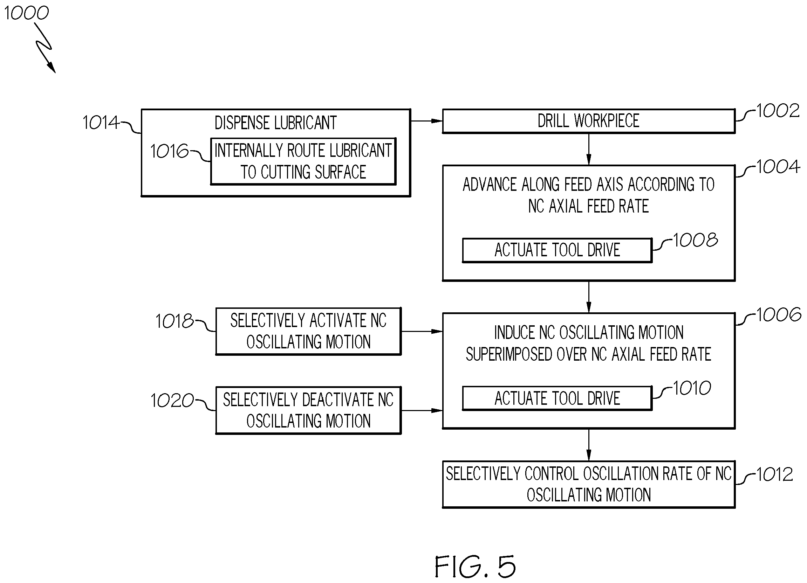

Referring generally to Figs. 1-38, by way of examples, the present disclosure is directed to an automated drilling system 100 100 (Fig. 1) and an automated drilling method 1000 (Fig. 5). In one or more examples, the automated drilling system 100 and the automated drilling method 1000 advantageously enable vibration assisted drilling using existing machine tools. Additionally, in one or more examples, the automated drilling system 100 and the automated drilling method 1000 enable a hybrid drilling operation that selectively activates and deactivates vibration assisted drilling, which is beneficial for drilling a stack-up of different material types.

The system 100 and method 1000 disclosed herein advantageously enable higher rate production and facilitate a new technique of drilling by inducing a numerically controlled oscillating motion superimposed over a spindle feed rate to improve the efficiency of chip formation and extraction. The controlled oscillation of the spindle and drill results in the partition of metallic chips into small triangular shapes that are easily extracted without the need for retract cycles, thereby, reducing the overall drill process time in production. Inducing micro-oscillations during the drilling process fragment metallic chips into small identical shapes that result in improved chip extraction performance, decreased production cycle time, increased hole quality, reductions in drill thrust, reductions in drill temperature, and reductions in necessary lubrication. The oscillation parameters are programmed in numerical controllers used in automated assembly equipment, enabling ease of integration with minimal changes to existing hardware. The chipbreaking feature of the drilling process is enabled by the oscillation parameters programmed in the computer numerical control (CNC). A mathematical function is prescribed in the drilling program that defines a sinusoidal profile, oscillation frequency, and amplitude. These oscillation parameters are tailored to integrate with the rotational speed and axial feed rate of each applicable drill size to generate a consistent chip formation.

Additionally, the system 100 and method 1000 disclosed herein advantageously facilitate a hybrid between conventional drilling (e.g., pecking) and vibration assisted drilling for compound materials that include a metallic material and a non-metallic material (e.g., composite). This hybrid technique facilitates a longer life of the cutting tool. During the conventional drilling portion of the drilling process, the drill operates at a higher rotational speed (RPM) when drilling through a non-metallic material, such as a composite. During the vibration assisted drilling portion of the drilling process, drill operates at a lower rotational speed when drilling through a metallic material. At an interface transition between the non-metallic and metallic materials, part of the cutting surface is in the non-metallic material, while a remaining portion is going through the metallic material. In order to maintain the higher rotational speed so that the cutting surface is through the entire non-metallic material, a conventional retract peck process is used at this transition operating at a higher rotational speed. After the cutting surface is completely through the non-metallic member, then the vibration assisted process activates. The single, full retract peck sequence clears any chips that may have been trapped in the flutes. This prevents trapped chips from blowing out of the drill exit and creating foreign object debris.

Referring to Fig. 1, in one or more examples, the automated drilling system 100 includes a power drill 106, a tool drive 108, and a controller 102. The tool drive 108 is coupled to the power drill 106. The tool drive 108 is configured to move the power drill 106 along a feed axis 110. The controller 102 is programmed with instructions 138. Execution of the instructions 138 causes the controller 102 to perform various operations by instructing (e.g., directing or commanding) the power drill 106 and/or the tool drive 108.

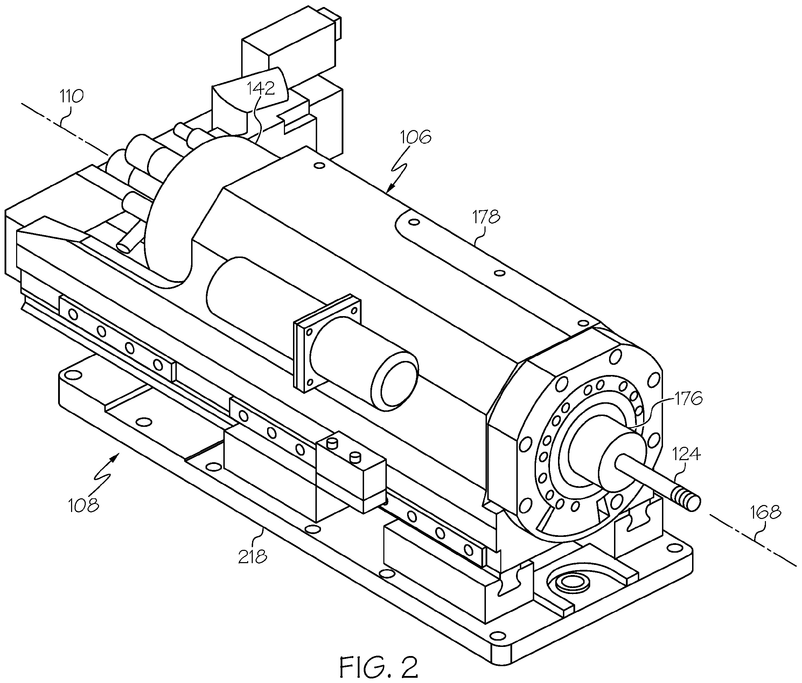

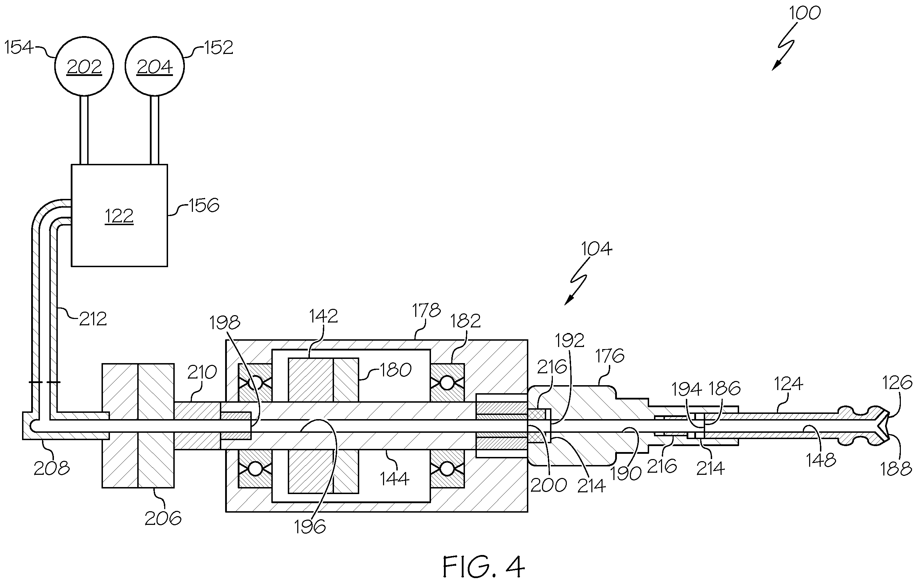

Referring to Fig. 1 and to Figs. 2-4, the power drill 106 includes any suitable power tool that is utilized for making a hole 128 in a workpiece 104. In one or more examples, the power drill 106 includes a motor 142, a spindle 144, a tool holder 176, and a cutting tool 124. The motor 142 drives rotation of the spindle 144 about a rotation axis 168. The tool holder 176 is coupled to the spindle 144. The tool holder 176 holds the cutting tool 124. The cutting tool 124 includes a cutting surface 126 that cuts material during rotation of the cutting tool 124. In one or more examples, the motor 142 is any suitable motion-producing device, such as a rotary motor. The motor 142 can be an electric motor, a pneumatic motor, or a hydraulic motor. The spindle 144 includes a shaft that is coupled to the motor 142. In one or more examples, the tool holder 176 includes any suitable clamp that facilitates attachment of the cutting tool 124, such as a chuck. In one or more examples, the cutting tool 124 includes any suitable drill bit. In one or more examples, the power drill 106 includes a transmission 180 (Fig. 4), such as gearing, that transmits power and/or rotary motion from the motor 142 to the spindle 144. In one or more examples, the power drill 106 includes one or more bearings 182 (Fig. 4) that support rotation of the spindle 144. In one or more examples, the power drill 106 includes a housing 178 (Fig. 4). One or more of the components of the power drill 106 can be located within the housing 178.

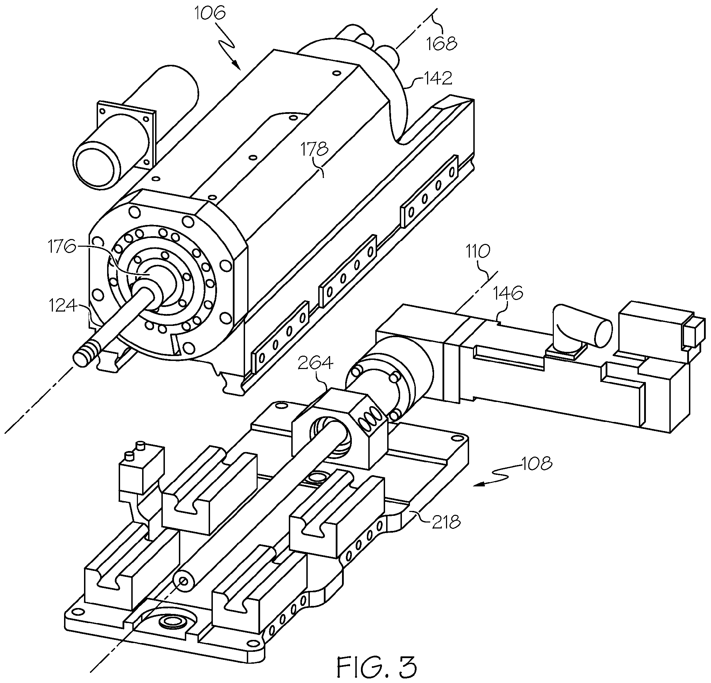

Referring to Fig. 1 and to Figs. 2 and 3, the tool drive 108 includes any suitable actuator that is utilized for producing and controlling linear motion of power drill 106 along the feed axis 110. In one or more examples, the tool drive 108 includes an actuator 146. In one or more examples, the actuator 146 is any suitable motion-producing device, such as a rotary actuator or a linear actuator. The actuator 146 can be an electro-mechanical actuator, a pneumatic actuator, or a hydraulic actuator. The actuator 146 drives motion of the power drill 106. In one or more examples, the tool drive 108 also includes a transmission 264 that is coupled to the actuator 146 and to the power drill 106. The transmission 264 transmits power and motion (e.g., rotatory) from the actuator 146 to linear motion of the power drill 106 along the feed axis 110. The transmission 264 includes any suitable gear arrangement, such as a worm screw and a worm gear. The tool drive 108 includes an encoder that detects rotation angle and/or linear displacement and facilitates motion control as commanded by the controller 102. As an example, the actuator 146 is a servo motor actuator. In one or more examples the tool drive 108 also includes a platform 218. The platform 218 is coupled to the transmission 264 and the power drill 106 is coupled to the platform 218.

Referring to Fig. 1, in one or more examples, the instructions 138 cause the controller 102 to instruct (e.g., command or direct) the tool drive 108 to advance the power drill 106 along the feed axis 110 according to a numerically controlled axial feed rate 112. Advancing the power drill 106 along the feed axis 110, in turn, advances the cutting tool 124 along the feed axis 110 into the hole 128 and maintains engagement of the cutting surface 126 with the workpiece 104 to deepen the hole 128.

In one or more examples, the instructions 138 cause the controller 102 to instruct the tool drive 108 to retract the power drill 106 along the feed axis 110. Retracting the power drill 106 along the feed axis 110, in turn, at least partially retracts (e.g., pecks) the cutting tool 124 along the feed axis 110 from the hole 128 and disengages the cutting surface 126 from the workpiece 104. In one or more examples, the retraction is a partial retraction of the cutting tool 124 from the hole 128. In one or more examples, the retraction is a full retraction of the cutting tool 124 from the hole 128.

In one or more examples, the instructions 138 cause the controller 102 to superimpose a numerically controlled oscillating motion 114 over the numerically controlled axial feed rate 112. The instructions 138 further cause the controller 102 to instruct the tool drive 108 to induce the numerically controlled oscillating motion 114 over or along the numerically controlled axial feed rate 112. In other words, the controller 102 instructs actuation of the tool drive 108 to cyclically retract and extend the power drill 106 according to the numerically controlled oscillating motion 114 along the feed axis 110 while advancing the power drill 106 along the feed axis 110 according to the numerically controlled axial feed rate 112 during a drilling operation. The cyclical retracting and extending of the power drill 106 according to the numerically controlled oscillating motion 114 along the feed axis 110 while advancing the power drill 106 along the feed axis 110 according to the numerically controlled axial feed rate 112 operates as vibration assisted drilling.

In one or more examples, the instructions 138 cause the controller 102 to activate and deactivate the numerical controlled oscillating motion 114 of the power drill 106. As an example, the controller 102 instructs the tool drive 108 to selectively activate and deactivate the numerical controlled oscillating motion 114 of the power drill 106. In one or more examples, control and selective activation and deactivation of the numerical controlled oscillating motion 114 of the power drill 106 is based on a material composition 130 of the workpiece 104.

In one or more examples, the instructions 138 cause the controller 102 to selectively control an oscillation rate 116 of the numerical controlled oscillating motion 114 of the power drill 106. As an example, the controller 102 instructs the tool drive 108 to increase or decrease the oscillation rate 116 of the numerical controlled oscillating motion 114. In one or more examples, selective control of the oscillation rate 116 facilitates control over a size 160 of a chip debris 158 formed during drilling.

Referring to Fig. 1, the workpiece 104 generally refers to any object, article, component, part, assembly, or the like. In one or more examples, the material composition 130 of the workpiece 104 includes a single material. In one or more examples, the material composition 130 of the workpiece 104 includes more than one material. In one or more examples, the workpiece 104 includes a combination of different materials in a stacked configuration, such as a stack-up, a laminate, or an assembly of two or more different materials, referred to generally herein as a stack 132.

In one or more examples, the stack 132 includes a first material, such as a metallic material 136, and a second material, such as a non-metallic material 166. In one or more examples, the metallic material 136 is aluminum, titanium, steel, or alloys of the same. In one or more examples, the non-metallic material 166 is a composite material 134, such as a fiber-reinforced plastic or polymer (e.g., carbon fiber-reinforced polymers).

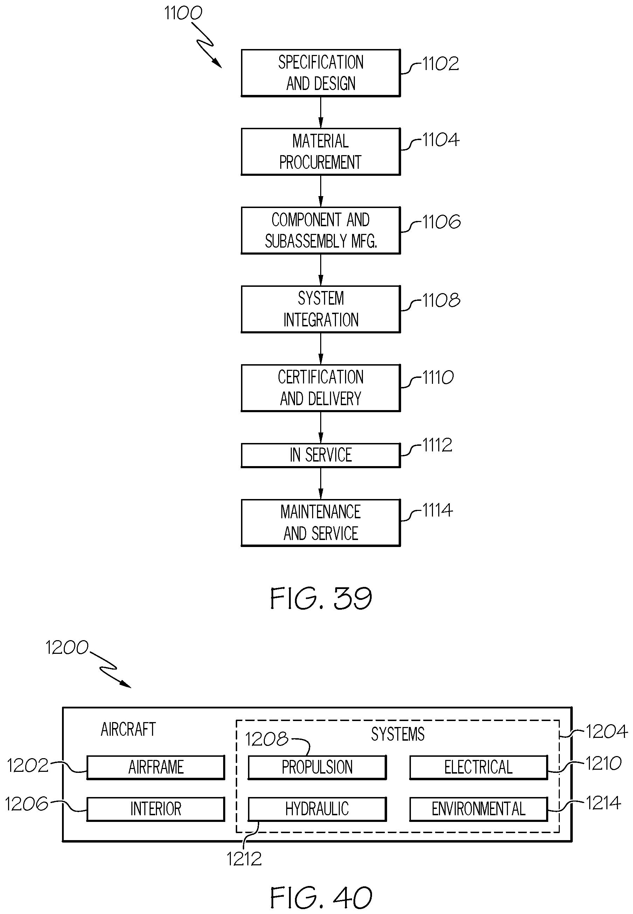

In one or more examples, the workpiece 104 is a component or assembly of an aircraft (e.g., aircraft 1200 in Fig. 40), such as a wing, a barrel section, a fuel tank, and the like. As an example, the workpiece 104 is a wing of an aircraft and the stack 132 is formed by a rib made of the metallic material 136 and a wing skin made of the composite material 134.

Referring to Fig. 1 and to Fig. 5, in one or more examples, the automated drilling method 1000 (Fig. 2) is a computer-implemented method. In one or more examples, implementation of the operational steps of the automated drilling method 1000 is performed by the controller 102 programmed with and executing the instructions 138.

Referring to Fig. 2, in one or more examples, the automated drilling method 1000 includes a step of (block 1002) drilling the workpiece 104. The automated drilling method 1000 includes a step of (block 1004) advancing along the feed axis 110 according to the numerically controlled axial feed rate 112. The automated drilling method 1000 includes a step of (block 1006) inducing the numerically controlled oscillating motion 114 superimposed over the numerically controlled axial feed rate 112.

As used herein, drilling has its ordinary meaning and refers to a cutting process where the cutting tool (e.g., cutting tool 124), such as a drill bit, is rotated to cut a hole (e.g., hole 128) in solid materials (e.g., workpiece 104).

Referring to Figs. 1 and 2, in one or more examples, according to the method 1000, the step of (block 1004) advancing includes a step of (block 1008) actuating the tool drive 108 to continuously extend the power drill 106 along the feed axis 110. The step of (block 1006) inducing includes a step of (block 1010) actuating the tool drive 108 to cyclically retract and extend the power drill 106 along the feed axis 110. As an example, the tool drive 108 is actuated to harmonically oscillate the cutting surface 126 of the cutting tool 124 relative to a work surface 184 of the workpiece 104 while drilling.

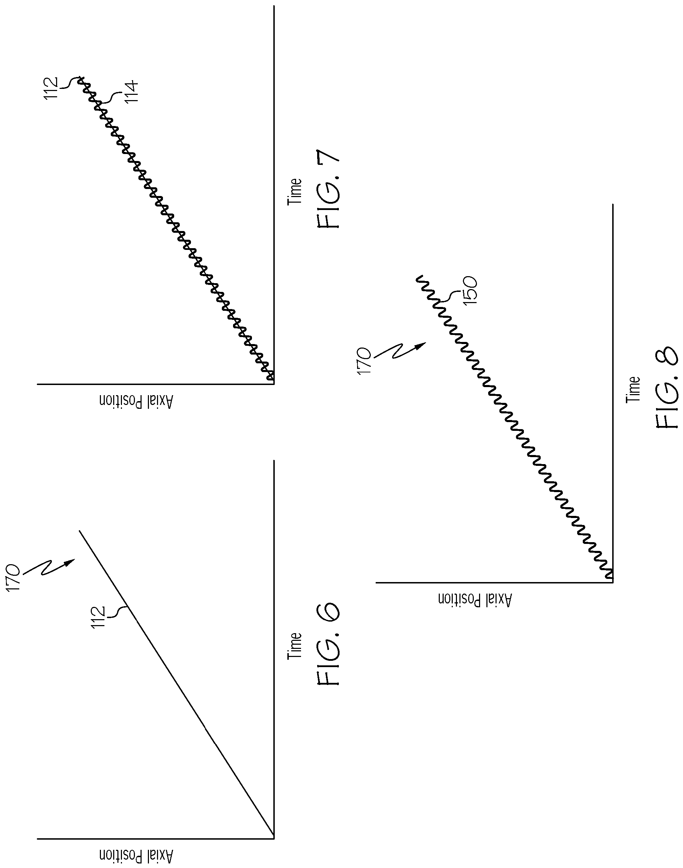

Fig. 6 illustrates an example of a numerically controlled feed profile 170 of the automated drilling system 100 according to the numerically controlled axial feed rate 112. In one or more examples, the numerically controlled axial feed rate 112 is constant. The numerically controlled feed profile 170 illustrates an axial position of the power drill 106 and, more particularly, of the cutting tool 124, over time. The numerically controlled feed profile 170 illustrated in Fig. 6 is exemplary of a conventional drilling operation performed by the automated drilling system 100 and/or according to the automated drilling method 1000. In one or more examples, a conventional drilling operation, as exemplified in Fig. 6, can be used to drill holes in the non-metallic material 166 of the workpiece 104.

Fig. 7 illustrates an example of the numerically controlled oscillating motion 114 that is superimposed over the numerically controlled axial feed rate 112. Superimposing the numerically controlled oscillating motion 114 over the numerically controlled axial feed rate 112 results in a modification to or a new permeation of the numerically controlled feed profile 170, namely a numerically controlled oscillating feed profile 150, as illustrated in Fig. 8.

Fig. 8 illustrates another example of the numerically controlled feed profile 170 of the automated drilling system 100 according to numerically controlled oscillating motion 114 superimposed over the numerically controlled axial feed rate 112. In one or more examples, the numerically controlled oscillating motion 114 is a harmonic oscillation. The numerically controlled feed profile 170 illustrated in Fig. 8 is exemplary of the vibration assisted drilling operation performed by the automated drilling system 100 and/or according to the automated drilling method 1000. In one or more examples, the vibration assisted drilling operation, as exemplified in Fig. 8, can be used to drill holes in the metallic material 136 of the workpiece 104.

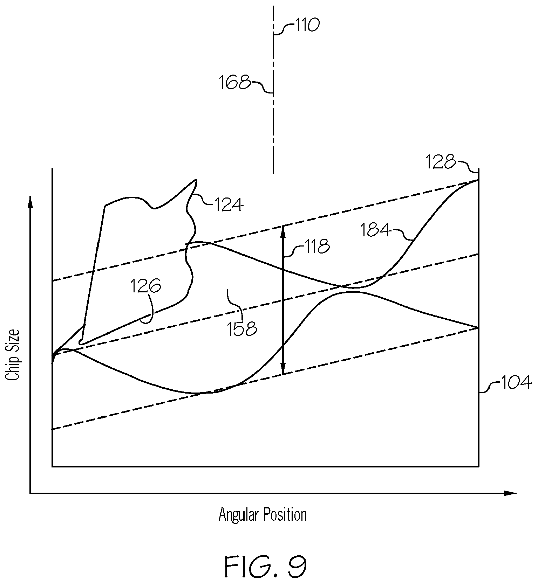

Fig. 9 illustrates an example of a vibration assisted drilling (VAD) operation. In one or more examples, during vibration assisted drilling, the cutting tool 124 rotates about the rotation axis 168 and oscillates along the feed axis 110 according to the numerically controlled oscillating motion 114 as the cutting tool 124 advances along the feed axis 110 according to the numerically controlled axial feed rate 112. In Fig. 9, only a portion of the cutting tool 124 is shown for illustration purposes. In Fig. 9, as an example, the rotation axis 168 and the feed axis 110 are parallel to or coincident with each other.

Referring to Fig. 9 and to Fig. 1, during a drilling operation, including conventional drilling and vibration assisted drilling, the cutting tool 124 rotates at a rotational speed 172 (e.g., rotations per minute "RPM"). The cutting surface 126 of the cutting tool 124 moves at a surface speed 174, also referred to as drill speed, (e.g., surface feet per minute "SFM"). The cutting tool 124 moves along the feed axis 110 at the numerical controlled axial feed rate 112 (e.g., inches per minute "IPM" or inches per revolution "IPM"). During vibration assisted drilling, the cutting tool 124 oscillates along the feed axis 110 according to the numerically controlled oscillating motion 114. The numerically controlled oscillating motion 114 includes the oscillation rate 116, an oscillation amplitude 118, and an oscillation frequency 120.

In one or more examples, the oscillation rate 116 is between approximately 1 oscillation per revolution and approximately 2 oscillations per revolution. In one or more examples, the oscillation rate 116 is approximately 1.5 oscillations per revolution. In one or more examples, the oscillation amplitude 118 is approximately 0.004 inch. In one or more examples, the oscillation frequency 120 is approximately 27 Hertz.

In one or more examples, during the conventional drilling portion of the drilling process used for the non-metallic material 166, the surface speed 174 (SFM) is held constant and the rotational speed 172 (RPM) is varied in response to a diameter of the cutting tool 124. In these examples, the numerical controlled axial feed rate 112 (IPM) is also constant throughout the non-metallic material 166.

In one or more examples, during the vibration assisted drilling portion of the drilling process used for the metallic material 136 (e.g., as illustrated in Fig. 9), the rotational speed 172 (RPM) is held constant by the oscillation parameters and the surface speed 174 (SFM) is varied in response to the diameter of the cutting tool 124. The oscillation amplitude 118, the oscillation frequency 120, and the oscillation rate 116 are set to generate formation of chip debris 158 having sizes 160 that are consistent.

Referring to Fig. 5 and to Fig. 9, in one or more examples, the method 1000 includes a step of (block 1012) selectively controlling the oscillation rate 116 of the numerically controlled oscillating motion 114. As an example, the oscillation rate 116 of the numerically controlled oscillating motion 114 is selectively controlled while the power drill 106 is being advanced along the feed axis 110 according to the numerically controlled axial feed rate 112. Selective control of the oscillation rate 116 provides control of the size 160 of the chip debris 158 formed during the step of (block 1002) drilling.

In one or more examples, according to the method 1000, the step of (block 1012) selectively controlling the oscillation rate 116 includes a step of increasing the oscillation rate 116 to decrease the size 160 of the chip debris 158 cut during the step of (block 1002) drilling. In one or more examples, according to the method 1000, the step of (block 1012) selectively controlling the oscillation rate 116 includes a step of decreasing the oscillation rate 116 to increase the size 160 of the chip debris 158 cut during the step of (block 1002) drilling.

Referring to Fig. 4 and to Fig. 1, in one or more examples, the power drill 106 is configured to internally route a lubricant 122 to the cutting surface 126 of the cutting tool 124. Internally routing the lubricant 122 to the cutting surface 126 of the cutting tool 124 enables disposition of the lubricant 122 without completely withdrawing the cutting tool 124 from the hole 128.

In one or more examples, the cutting tool 124 includes a cutting-tool channel 148 that extends longitudinally through the center of the cutting tool 124. As an example, the cutting tool 124 has a hollow core. The cutting-tool channel 148 includes a first cutting-tool opening 186 that is located at a base of the cutting tool 124. The cutting-tool channel 148 includes at least one second cutting-tool opening 188 that is located at the cutting surface 126 of the cutting tool 124.

In one or more examples, the tool holder 176 includes a tool-holder channel 190 that extends longitudinally through the center of the tool holder 176. The tool-holder channel 190 is in fluid communication with the cutting-tool channel 148. As an example, the tool holder 176 has a hollow core that is aligned with the hollow core of the cutting tool 124. The tool-holder channel 190 includes a first tool-holder opening 192 that is located at a first end of the tool holder 176. The tool-holder channel 190 includes a second tool-holder opening 194 that is located at an opposed second end of the tool holder 176.

In one or more examples, the spindle 144 includes a spindle channel 196 that extends longitudinally through the center of the spindle 144. The spindle channel 196 is in fluid communication with the tool-holder channel 190. As an example, the spindle 144 has a hollow core that is aligned with the hollow core of the tool holder 176. The spindle channel 196 includes a first spindle opening 198 that is located at a first end of the spindle 144. The spindle channel 196 includes a second spindle opening 200 that is located at an opposed second end of the spindle 144.

Accordingly, the lubricant 122 is provided to the power drill 106 and is routed through the spindle channel 196, the tool-holder channel 190, and the cutting-tool channel 148 to the cutting surface 126 of the cutting tool 124. As such, the lubricant 122 is provided to the cutting surface 126 and/or the work surface 184 while drilling and without removing the cutting tool 124 from the hole 128.

In one or more examples, the lubricant 122 includes a mixture of oil 202 and air 204. In these examples, the automated drilling system 100 includes an oil reservoir 154 and an air supply 152. The automated drilling system 100 also includes a mixing chamber 156. The oil 202 and the air 204 are provided to the mixing chamber 156 and are mixed with each other inside the mixing chamber 156. The lubricant 122 (e.g., oil and air mixture) is provided to the power drill 106 from the mixing chamber 156. As an example, the lubricant 122 is routed from the mixing chamber 156 to the spindle channel 196 via any suitable fluid transfer line 212.

In one or more examples, the automated drilling system 100 includes one or more fittings and/or joints for introducing the lubricant 122 to the power drill 106. In one or more examples, the automated drilling system 100 includes a first fitting 208 that is coupled to and in fluid communication with the fluid transfer line 212, The first fitting 208 receives the lubricant 122 from the mixing chamber 156. The automated drilling system 100 includes a second fitting 210 that is coupled to the spindle 144 and that is in fluid communication with the spindle channel 196 and the first fitting 208. In one or more examples, the automated drilling system 100 includes a rotary union 206 that joins the first fitting 208 and the second fitting 210 and enables rotation of the second fitting 210 relative to the first fitting 208 during drilling.

In one or more examples, the power drill 106 includes one or more fittings and/or joints for sealing interfaces between the spindle channel 196, the tool-holder channel 190, and the cutting-tool channel 148. In one or more examples, the power drill 106 includes at least one O-ring 214 located between the cutting tool 124 and the tool holder 176. In one or more examples, the power drill 106 includes at least one O-ring 214 located between the tool holder 176 and the spindle 144. In one or more examples, the power drill 106 includes a tubular seal fitting 216 located between the cutting tool 124 and the tool holder 176. In one or more examples, the power drill 106 includes another tubular seal fitting 216 located between the tool holder 176 and the spindle 144.

Referring to Fig. 5 and to Figs. 1 and 4, in one or more examples, the method 1000 includes as step of (block 1014) dispensing the lubricant 122. The lubricant 122 is dispensed to the cutting surface 126 of the cutting tool 124. In one or more examples, the lubricant 122 is dispensed during the step of (block 1002) drilling. In one or more examples, the lubricant 122 is dispensed to the cutting surface 126 of the cutting tool 124 while at least a portion of the cutting tool 124 is located within the hole 128 being drilled in the workpiece 104. In one or more examples, according to the method 1000, the step of (block 1014) dispensing the lubricant 122 includes a step of (block 1016) internally routing the lubricant 122 to the cutting surface 126 of the cutting tool 124.

Referring to Fig. 5, in one or more examples, according to the method 1000, the step of (block 1006) inducing the numerical controlled oscillating motion 114 is selectively activated and deactivated based on the material composition 130 of the workpiece 104. As an example, the method 1000 includes a step of (block 1018) selectively activating the numerical controlled oscillating motion 114 and a step of (block 1020) selectively deactivating the numerical controlled oscillating motion 114.

Referring to Fig. 5 and to Fig. 1, in one or more examples, according to the method 1000, the workpiece 104 includes the stack 132 of different material types. In one or more examples, the stack 132 includes the non-metallic material 166 (e.g., the composite material 134) and the metallic material 136. In one or more examples, the step of (block 1006) inducing the numerical controlled oscillating motion 114 is performed while drilling the metallic material 136. As an example, the numerical controlled oscillating motion 114 is selectively activated (e.g., block 1018) during a portion of the drilling step (e.g., block 1002) in which the metallic material 136 of the stack 132 is being drilled and is selectively deactivated (e.g., block 1020) during a portion of the drilling step (e.g., block 1002) in which the non-metallic material 166 (e.g., composite material 134) of the stack 132 is being drilled.

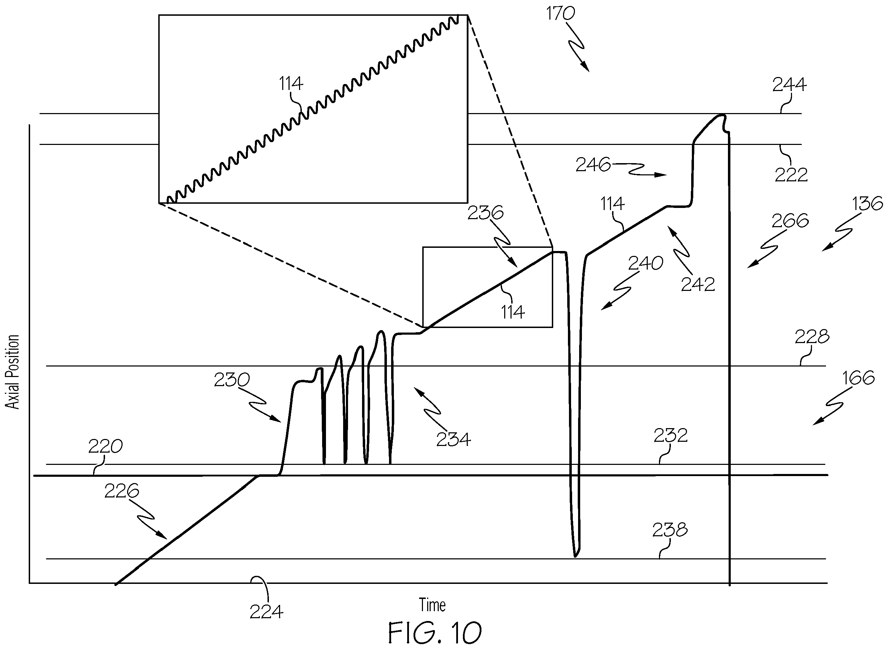

Fig. 10 illustrates an example of the numerically controlled feed profile 170 of the automated drilling system 100 and/or according to the automated drilling method 1000 during an exemplary drilling operation performed on the stack 132 of the metallic material 136 and the non-metallic material 166 (e.g., composite material 134). The drilling operation exemplified in Fig. 10 is the hybrid drilling operation in which the non-metallic material 166 of the stack 132 is initially drilled using conventional drilling (e.g., first drilling parameters) and the metallic material 136 of the stack 132 is then drilled using the vibration assisted drilling (e.g., second drilling parameters).

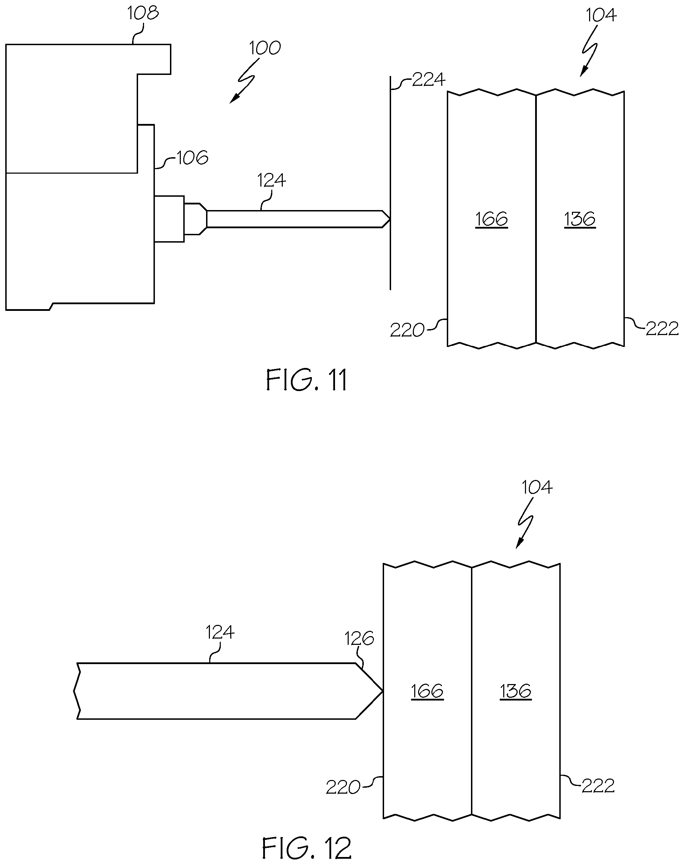

Figs. 11-17 illustrate different stages of an example drilling operation performed by the automated drilling system 100 and/or according to the automated drilling method 1000, such as depicted in Fig. 10. In Figs. 10 and 11-17, the different stages are described and illustrated by reference to an axial location of the cutting tool 124 and, more particularly, the cutting surface 126 and drilling parameters of the power drill 106 and the tool drive 108.

Fig. 11 illustrates an example of the cutting surface 126 moved to or otherwise positioned at an approach point 224. When the cutting surface 126 (e.g., a tip of the cutting tool 124) is between the approach point 224 and a workpiece surface 220 of the workpiece 104, the power drill 106 defaults to values for the NC axial feed rate 112 (IPR) and the surface speed 174 (SFM) set for a lead-in process (Fig. 12).

The cutting surface 126 is advanced along the feed axis 110 from the approach point 224 and the workpiece surface 220 of the workpiece 104. An example of advancement of the cutting surface 126 along the feed axis 110 from the approach point 224 to the workpiece surface 220 is illustrated by portion 226 of the numerically controlled feed profile in Fig. 10.

Fig. 12 illustrates an example of the lead-in process in which the cutting surface 126 (e.g., drill tip) engages the workpiece surface 220. In one or more examples, the drilling parameters of the lead-in process operates at a value for the surface speed 174 (SFM) that is slower than a value for the surface speed 174 (SFM) used while drilling the non-metallic material 166 for greater stability and reduced entry breakout. In one or more examples, the NC axial feed rate 112 (IPR) during the lead-in process is continuous and constant.

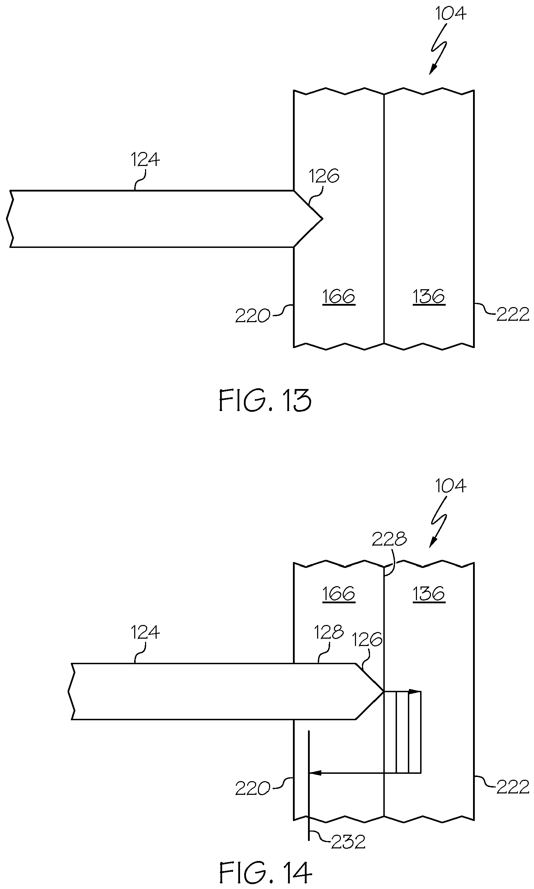

Fig. 13 illustrates an example of initiation of a non-metallic material (e.g., composite material) drilling process. In one or more examples, when a full diameter of the cutting tool 124 enters the workpiece 104, a conventional drilling process begins using values for the NC axial feed rate 112 (IPR) and the surface speed 174 (SFM) set for drilling the non-metallic material 166. In one or more examples, the NC axial feed rate 112 (IPR) during the non-metallic material drilling process is continuous and constant.

The non-metallic material drilling process continues as the cutting surface 126 is advanced along the feed axis 110 using the conventional drilling parameters, including values for the NC axial feed rate 112 (IPR) and the surface speed 174 (SFM) set for drilling the non-metallic material 166 until reaching a fay interface 228 (e.g., shown in Fig. 14). An example of advancement of the cutting surface 126 along the feed axis 110 during the non-metallic material drilling process is illustrated by portion 230 of the numerically controlled feed profile in Fig. 10.

Fig. 14 illustrates an example of a first breakout process where the cutting surface 126 is passing through the fay interface 228 of the stack 132. The fay interface 228 is formed by contacting, or faying, surfaces of the non-metallic material 166 and the metallic material 136. The first breakout process includes a portion of the drilling process where the cutting surface 126 breaks out of the non-metallic material 166 and leads into the metallic material 136 of the stack 132. In one or more examples, when the cutting surface 126 (e.g., drill tip) reaches the fay interface 228 of the stack 132, an intermediate peck process begins. The cutting surface 126 is retracted at least once along the feed axis 110 to a peck retract location 232. In one or more examples, the peck retract location 232 is set at 0.150 inch inside the workpiece surface 220. In one or more examples, routing and dispensing of the lubricant 122 is enabled during the first breakout process.

An example of the first breakout process and the intermediate peck process of the cutting surface 126 along the feed axis 110 is illustrated by portion 234 of the numerically controlled feed profile in Fig. 10.

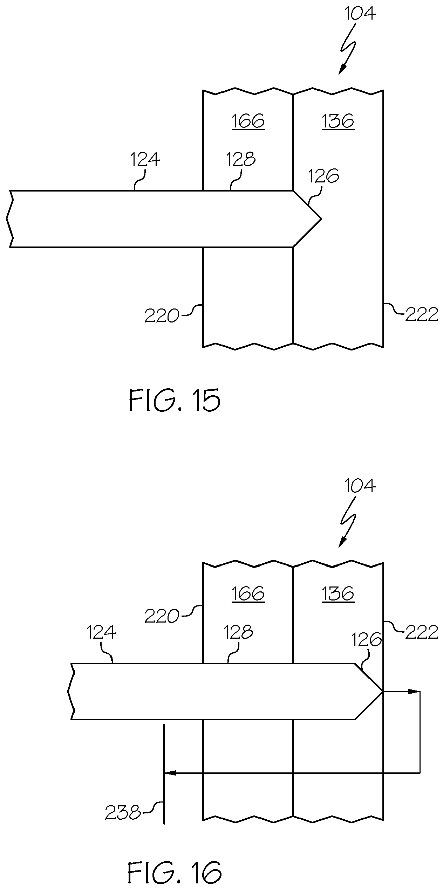

Fig. 15 illustrates an example of initiation of a metallic material drilling process. In one or more examples, when the full diameter of the cutting tool 124 reaches the metallic material 136 (e.g., layer) of the stack 132, the vibration assisted drilling process is enabled and begins using values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136. In one or more examples, routing and dispensing of the lubricant 122 is enabled during the metallic material drilling process.

The metallic material drilling process continues as the cutting surface 126 is advanced along the feed axis 110 using the vibration assisted drilling parameters, including values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136 until reaching a backside surface 222 of the stack 132 (e.g., shown in Fig. 16). An example of advancement of the cutting surface 126 along the feed axis 110 with the NC oscillating motion 114 during the metallic material drilling process is illustrated by portion 236 of the numerically controlled feed profile in Fig. 10.

Fig. 16 illustrates an example of a second breakout process where the cutting surface 126 is passing through the backside surface 222 of the workpiece 104. The second breakout process includes a portion of the drilling process where the cutting surface 126 breaks out of the metallic material 136 at the backside surface 222 of the stack 132. When the cutting surface 126 (e.g., drill tip) reaches the backside surface 222 (e.g., exit surface) of the stack 132, a single retract process is performed. The cutting surface 126 is retracted along the feed axis 110 to a single retract location 238. In one or more examples, the single retract location 238 is set outside of the workpiece surface 220. The single retract process eliminates packing of the chip debris 158. The vibration assisted drilling parameters of the metallic material drilling process continue through the second breakout process. In one or more examples, routing and dispensing of the lubricant 122 is enabled during the second breakout process.

An example of the second breakout process and the single retract process of the cutting surface 126 along the feed axis 110 with the NC oscillating motion 114 during the metallic material drilling process is illustrated by portion 240 of the numerically controlled feed profile in Fig. 10. An example of advancement of the cutting surface 126 along the feed axis 110 with the NC oscillating motion 114 during continuation of the metallic material drilling process is illustrated by portion 242 of the numerically controlled feed profile in Fig. 10.

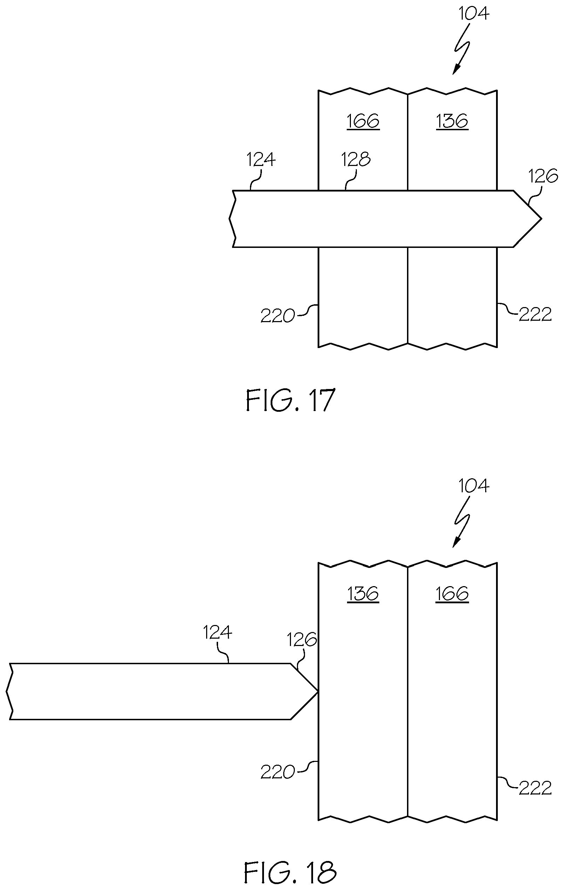

Fig. 17 illustrates an example of a rapid advance to chamfer process. In one or more examples, when the full diameter of the cutting tool 124 exits the stack 132, the cutting surface 126 rapidly advances to a chamfer position 244 to begin the chamfer process. The vibration assisted drilling parameters of the metallic material drilling process are deactivated during the chamfer process. In one or more examples, routing and dispensing of the lubricant 122 is disabled during the chamfer process.

An example of the chamfer process of the cutting surface 126 along the feed axis 110 is illustrated by portion 246 of the numerically controlled feed profile in Fig. 10.

The cutting tool 124 is then retracted along the feed axis 110 and the cutting tool 124 is removed from the hole 128 formed through the workpiece 104. An example of a return process of the cutting surface 126 along the feed axis 110 is illustrated by portion 266 of the numerically controlled feed profile in Fig. 10.

In one or more examples, the numerically controlled feed profile illustrated in Fig. 10 and the drilling process illustrated in Figs. 11-17 are exemplary of the automated drilling method 1000. In one or more examples, the numerically controlled feed profile 170 illustrated in Fig. 10 and the drilling process illustrated in Figs. 11-17 are implemented using the automated drilling system 100. As examples, the different stages or processes of the drilling method illustrated in Figs. 11-17 are executed under direction of the controller 102. For example, advancing the cutting surface 126, retracting the cutting surface 126, and oscillating the cutting surface 126 at different portions of the drilling method 1000 are performed by the tool drive 108 under direction from the controller 102.

Figs. 10-17 illustrate examples of the automated drilling method 1000 in which the workpiece 104 includes the stack 132 of the non-metallic material 166 and the metallic material 136 and in which the non-metallic material 166 is drilled first according to conventional drilling parameters and the metal material 136 is drilled second according to the vibration assisted drilling parameters. In other examples, as illustrated in Figs. 18-23, the workpiece 104 includes the stack 132 of the non-metallic material 166 and the metallic material 136. However, the metallic material 136 is drilled first according to the vibration assisted drilling parameters and the non-metal material 166 is drilled second according to the conventional drilling parameters.

Figs. 18-23 illustrate different stages of an example drilling operation performed by the automated drilling system 100 and/or according to the automated drilling method 1000. In Figs. 18-23, the different stages are described and illustrated by reference to an axial location of the cutting tool 124 and, more particularly, the cutting surface 126 and drilling parameters of the power drill 106 and the tool drive 108.

Fig. 18 illustrates an example of the lead-in process in which the cutting surface 126 engages the workpiece surface 220. When the cutting surface 126 reaches the workpiece surface 220, the lead-in process begins, and the vibration assisted drilling parameters are enabled. In one or more examples, routing and dispensing of the lubricant 122 is enabled during the lead-in process.

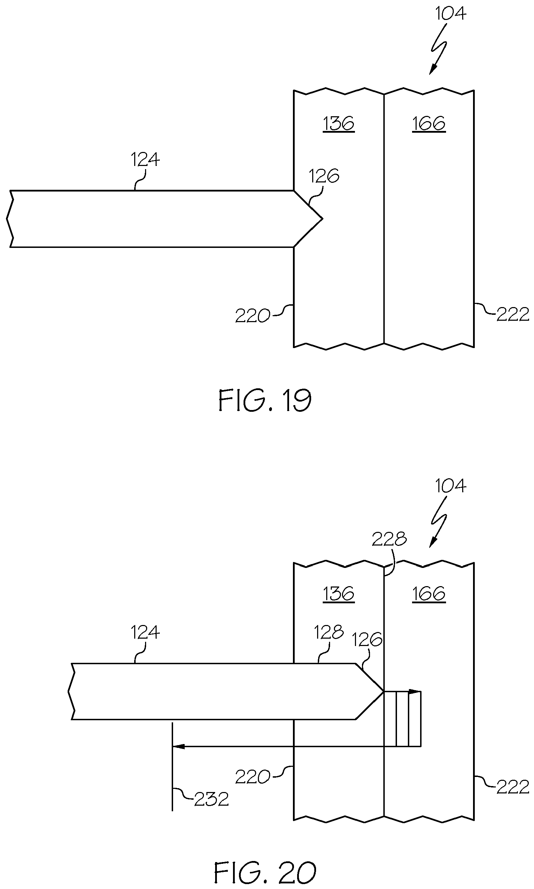

Fig. 19 illustrates an example of initiation of the metallic material drilling process. In one or more examples, when the full diameter of the cutting tool 124 enters the workpiece surface 220, the vibration assisted drilling process is continues and uses values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136. In one or more examples, routing and dispensing of the lubricant 122 is enabled during the metallic material drilling process.

The metallic material drilling process continues as the cutting surface 126 is advanced along the feed axis 110 using the vibration assisted drilling parameters, including values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136 until reaching the fay interface 228 (e.g., shown in Fig. 19).

Fig, 20 illustrates an example of the first breakout process where the cutting surface 126 is passing through the fay interface 228 of the stack 132. In this example, the fay interface 228 is formed by contacting, or faying, surfaces of the metallic material 136 and the non-metallic material 166 and the first breakout process includes a portion of the drilling process where the cutting surface 126 breaks out of the metallic material 136 and leads into the non-metallic material 166 of the stack 132. In one or more examples, when the cutting surface 126 reaches the fay interface 228 of the stack 132, an intermediate peck process begins. The cutting surface 126 is retracted at least once along the feed axis 110 to the peck retract location 232. In one or more examples, the peck retract location 232 is set outside of the workpiece surface 220. In one or more examples, routing and dispensing of the lubricant 122 is enabled during the first breakout process.

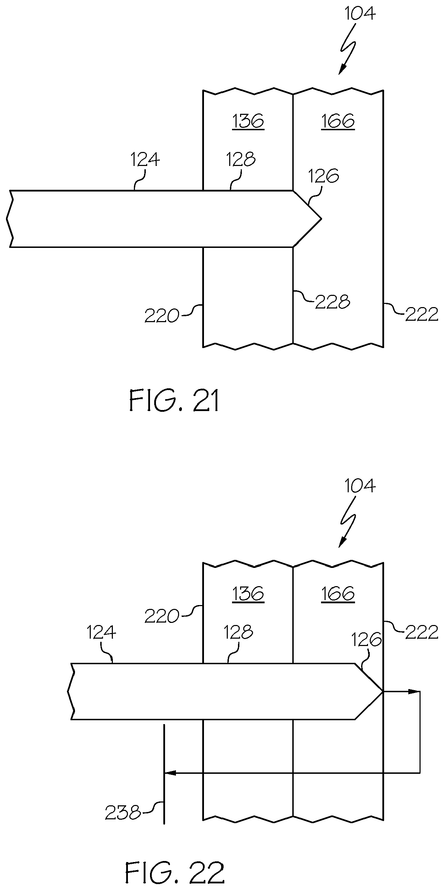

Fig. 21 illustrates an example of initiation of the non-metallic (e.g., composite) material drilling process. In one or more examples, When the full diameter of the cutting tool 124 reaches the non-metallic material 166 (e.g., layer) of the stack 132, the conventional drilling process begins using values for the NC axial feed rate 112 (IPR) and the surface speed 174 (SFM) set for drilling the non-metallic material 166. In one or more examples, the NC axial feed rate 112 (IPR) during the non-metallic material drilling process is continuous and constant. In one or more examples, routing and dispensing of the lubricant 122 is disabled during the non-metallic material drilling process.

The non-metallic material drilling process continues as the cutting surface 126 is advanced along the feed axis 110 using the conventional drilling parameters, including values for the NC axial feed rate 112 (IPR) and the surface speed 174 (SFM) set for drilling the non-metallic material 166 until reaching the backside surface 222 (e.g., shown in Fig. 22).

Fig. 22 illustrates an example of a second breakout process where the cutting surface 126 is passing through the backside surface 222 of the workpiece 104. The second breakout process includes a portion of the drilling process where the cutting surface 126 breaks out of the non-metallic material 166 at the backside surface 222 of the stack 132. In one or more examples, when the cutting surface 126 (e.g., drill tip) reaches the backside surface 222 (e.g., exit surface) of the stack 132, a single retract process is performed. The cutting surface 126 is retracted along the feed axis 110 to the single retract location 238. In one or more examples, the single retract location 238 is set outside of the workpiece surface 220. The single retract process eliminates packing of the chip debris 158. The vibration assisted drilling parameters of the metallic material drilling process continue through the second breakout process. In one or more examples, routing and dispensing of the lubricant 122 is enabled during the second breakout process.

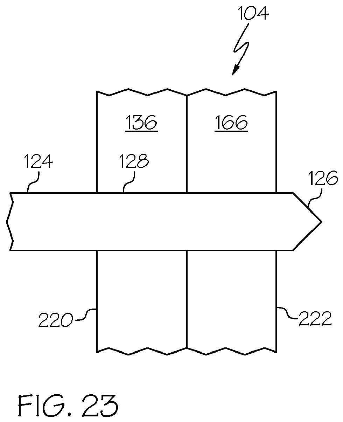

Fig. 23 illustrates an example of the rapid advance to chamfer process. In one or more examples, when the full diameter of the cutting tool 124 exits the stack 132, the cutting surface 126 rapidly advances to the chamfer position 244 to begin the chamfer process. In one or more examples, routing and dispensing of the lubricant 122 is disabled during the chamfer process.

The cutting tool 124 is then retracted along the feed axis 110 and the cutting tool 124 is removed from the hole 128 formed through the workpiece 104.

In one or more examples, the drilling process illustrated in Figs. 18-23 are exemplary of the automated drilling method 1000. In one or more examples, the drilling process illustrated in Figs. 18-23 are implemented using the automated drilling system 100. As examples, the different stages or processes of the drilling method illustrated in Figs. 18-23 are executed under direction of the controller 102. For example, advancing the cutting surface 126, retracting the cutting surface 126, and oscillating the cutting surface 126 at different portions of the drilling method 1000 are performed by the tool drive 108 under direction from the controller 102.

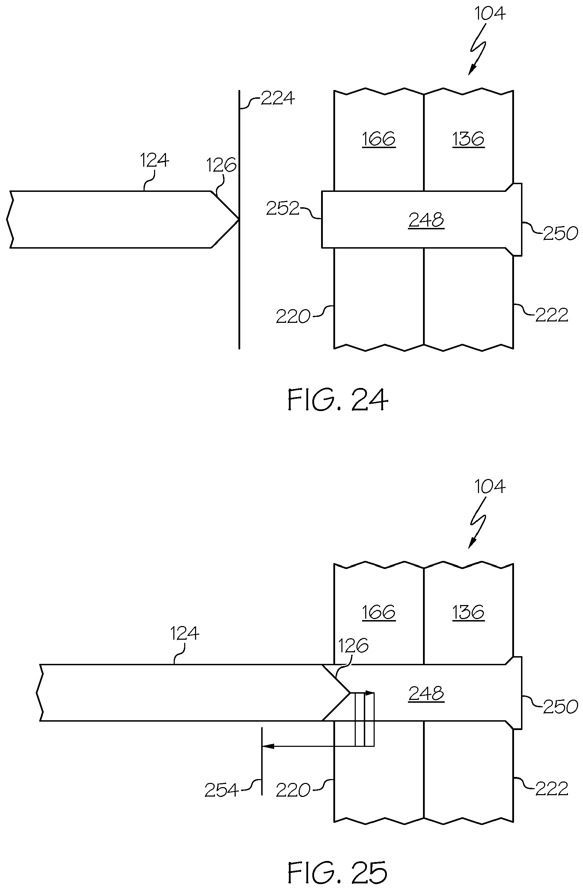

Figs. 10-23 illustrate examples of the automated drilling method 1000 for drilling the hole 128 through the workpiece 104 that includes the stack 132 of different material layers. In other examples, as illustrated in Figs. 24-37, the workpiece 104 includes a tack fastener 248 installed through the stack 132. In these examples implementations of the automated drilling system 100 and/or the automated drilling method 1000 enable drilling out the tack fastener 248.

As illustrated in Figs. 24-37, in one or more examples, when drilling through the stack 132 having the tack fastener 248, a head 250 of the tack fastener 248 is typically installed against the layer of the metallic material 136.

Figs. 24-37 illustrate different stages of an example drilling operation performed by the automated drilling system 100 and/or according to the automated drilling method 1000. In Figs. 24-30, the different stages are described and illustrated by reference to an axial location of the cutting tool 124 and, more particularly, the cutting surface 126 and drilling parameters of the power drill 106 and the tool drive 108.

Fig. 24 illustrates an example of the cutting surface 126 moved to or otherwise positioned at the approach point 224. When the cutting surface 126 (e.g., a tip of the cutting tool 124) is between the approach point 224 and the workpiece surface 220 of the workpiece 104, the power drill 106 defaults to values for the NC axial feed rate 112 (IPR) and the surface speed 174 (SFM) set for the lead-in process (Fig. 25).

The cutting surface 126 is advanced along the feed axis 110 from the approach point 224 to an end 252 of the tack fastener 248 of the workpiece 104.

Fig. 25 illustrates an example of the lead-in process in which the cutting surface 126 (e.g., drill tip) engages the end 252 of the tack fastener 248. In one or more examples, prior to the cutting surface 126 reaching inside the stack 132 (e.g., 0.150 inch inside of the workpiece surface 220), an exterior peck process begins. The cutting surface 126 is retracted at least once along the feed axis 110 to an exterior peck retract location 254. In one or more examples, the exterior peck retract location 254 is set at 0.150 inch outside the workpiece surface 220.

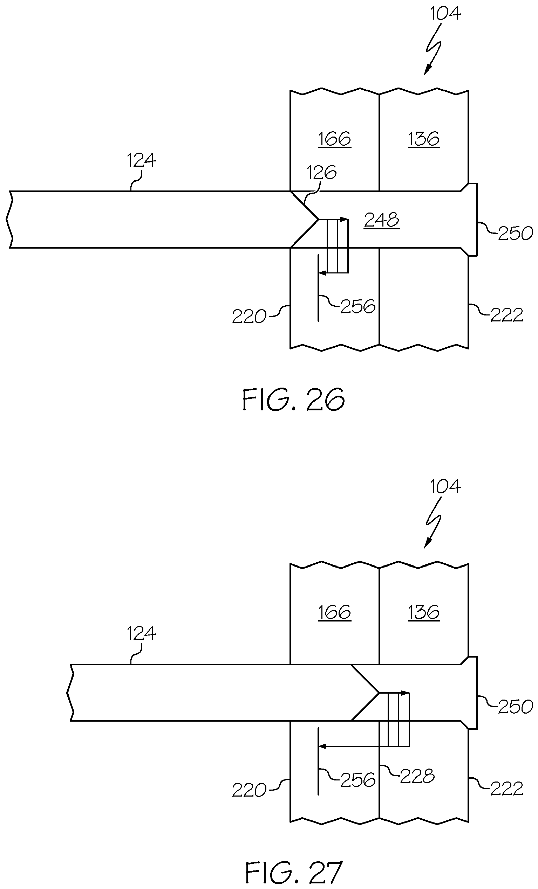

Fig. 26 illustrates an example of initiation of the non-metallic material (e.g., composite material) drilling process. In one or more examples, when the full diameter of the cutting tool 124 enters the workpiece 104, the conventional drilling process begins using values for the NC axial feed rate 112 (IPR) and the surface speed 174 (SFM) set for drilling the non-metallic material 166. In one or more examples, the NC axial feed rate 112 (IPR) during the non-metallic material drilling process is continuous and constant. When the cutting surface 126 passes an interior peck retract location 256 plus one peck-depth inside the stack 132, an interior peck process begins. The cutting surface 126 is retracted at least once along the feed axis 110 to the interior peck retract location 256. In one or more examples, the interior peck retract location 256 is set at 0.150 inch inside the workpiece surface 220.

The non-metallic material drilling process continues as the cutting surface 126 is advanced along the feed axis 110 using the conventional drilling parameters, including values for the NC axial feed rate 112 (IPR) and the surface speed 174 (SFM) set for drilling the non-metallic material 166 until reaching the fay interface 228 (e.g., shown in Fig. 27).

Fig. 27 illustrates an example of the first breakout process where the cutting surface 126 is passing through the fay interface 228 of the stack 132. In one or more examples, when the cutting surface 126 reaches the fay interface 228 of the stack 132, a second interior peck process begins. The cutting surface 126 is retracted at least once along the feed axis 110 to the interior peck retract location 256. In one or more examples, the peck retract location 232 is set at 0.150 inch inside the workpiece surface 220. In one or more examples, routing and dispensing of the lubricant 122 is enabled during the first breakout process.

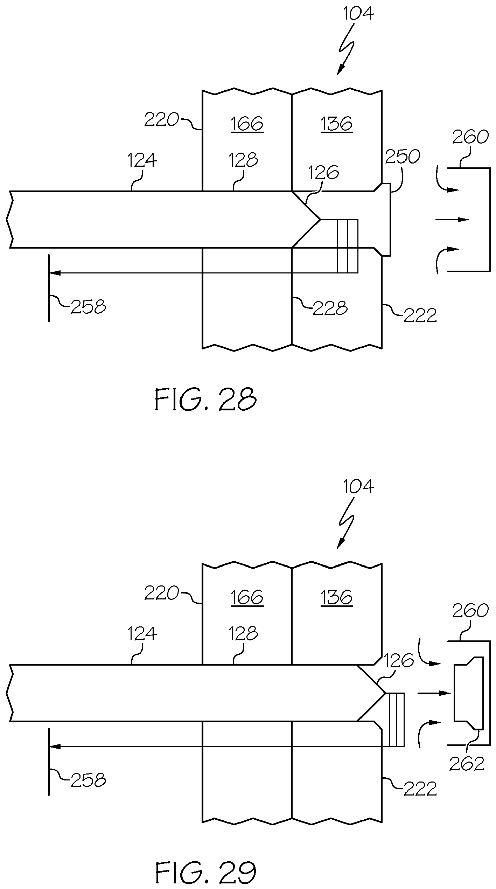

Fig. 28 illustrates an example of initiation of the metallic material drilling process. In one or more examples, when the full diameter of the cutting tool 124 enters the metallic material 136 (e.g., layer) of the stack 132, the vibration assisted drilling process is enabled and begins using values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136. In one or more examples, when the full diameter of the cutting tool 124 enters the layer of the metallic material 136, the vibration assisted drilling process begins and a second exterior peck process begins. The cutting surface 126 is retracted at least once along the feed axis 110 to a second exterior peck retract location 258. In one or more examples, the second exterior peck retract location 258 is set at 0.5 inch outside the workpiece surface 220. In one or more examples, routing and dispensing of the lubricant 122 is enabled during the metallic material drilling process.

The metallic material drilling process continues as the cutting surface 126 is advanced along the feed axis 110 using the vibration assisted drilling parameters, including values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136 until reaching the backside surface 222 of the stack 132 (e.g., shown in Fig. 29).

In one or more examples, the automated drilling system 100 includes a pressure foot vacuum 260. The pressure foot vacuum 260 is utilized to extract tack debris 262 (Fig. 29) exiting the backside surface 222 of the workpiece 104. In one or more examples, the pressure foot vacuum 260 is enabled during the metallic material drilling process.

Fig. 29 illustrates an example of the second breakout process where the cutting surface 126 is passing through the backside surface 222 of the workpiece 104 and pushing out the tack debris 262 (e.g., remnants of the tack fastener 248). When the cutting surface 126 reaches the backside surface 222 and exits the stack 132, a third exterior retract process is performed. The cutting surface 126 is retracted at least once along the feed axis 110 to the second exterior peck retract location 258. The retract process eliminates packing of the chip debris 158. The vibration assisted drilling parameters of the metallic material drilling process continue through the second breakout process. In one or more examples, routing and dispensing of the lubricant 122 is enabled during the second breakout process.

In one or more examples, the pressure foot vacuum 260 is enabled during the second breakout process to extract the tack debris 262 exiting the workpiece 104.

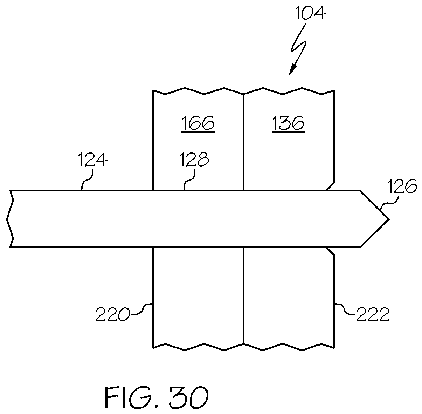

Fig. 30 illustrates an example of the rapid advance to chamfer process. In one or more examples, when the full diameter of the cutting tool 124 exits the stack 132, the cutting surface 126 rapidly advances to the chamfer position 244 to begin the chamfer process. The vibration assisted drilling parameters of the metallic material drilling process are deactivated during the chamfer process. In one or more examples, routing and dispensing of the lubricant 122 is disabled during the chamfer process. In one or more examples, the pressure foot vacuum 260 is disabled during the second breakout process to extract the tack debris 262 exiting the workpiece 104.

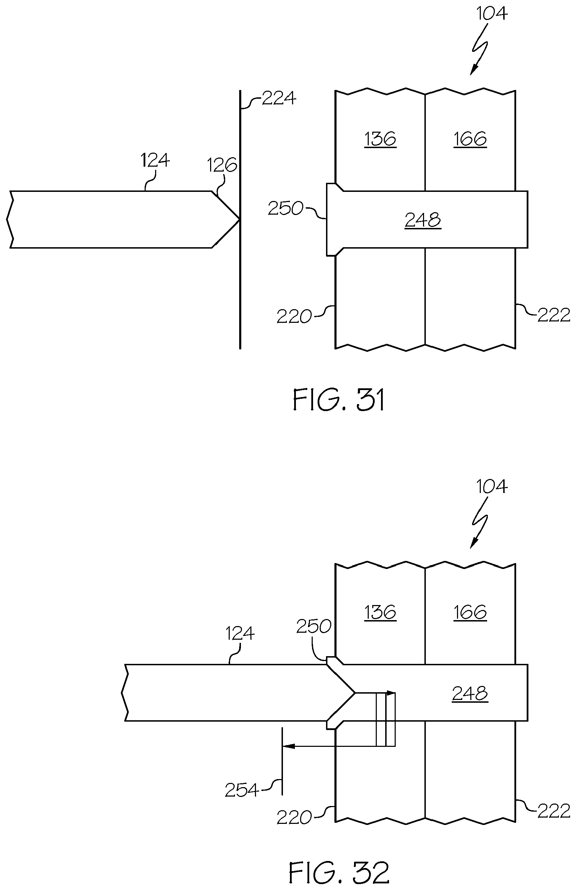

Fig. 31 illustrates an example of the cutting surface 126 moved to or otherwise positioned at the approach point 224. When the cutting surface 126 (e.g., a tip of the cutting tool 124) is between the approach point 224 and the workpiece surface 220 of the workpiece 104, the power drill 106 defaults to values for the NC axial feed rate 112 (IPR) and the surface speed 174 (SFM) set for the lead-in process (Fig. 32).

The cutting surface 126 is advanced along the feed axis 110 from the approach point 224 to the head 250 of the tack fastener 248 of the workpiece 104.

Fig. 32 illustrates an example of the lead-in process in which the cutting surface 126 (e.g., drill tip) engages the head 250 of the tack fastener 248. In one or more examples, prior to the cutting surface 126 reaching inside the stack 132 (e.g., 0.150 inch inside of the workpiece surface 220), an exterior peck process begins. The cutting surface 126 is retracted at least once along the feed axis 110 to the exterior peck retract location 254. In one or more examples, the exterior peck retract location 254 is set at 0.150 inch outside the workpiece surface 220.

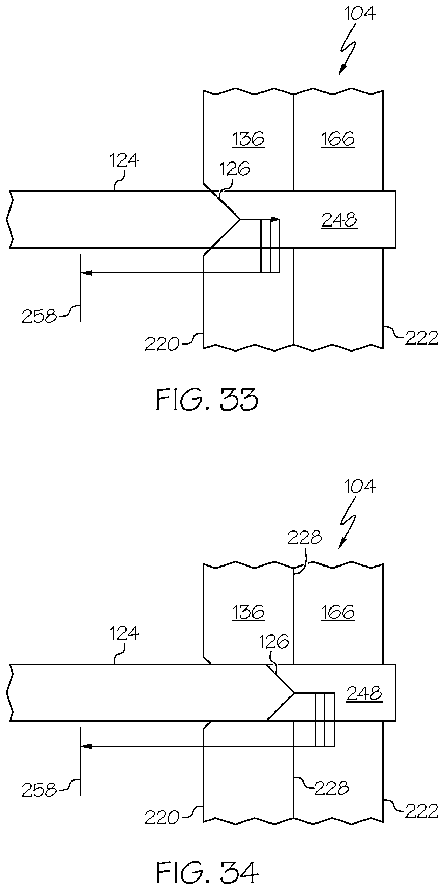

Fig. 33 illustrates an example of initiation of the metallic material drilling process. In one or more examples, when the full diameter of the cutting tool 124 reaches the metallic material 136 (e.g., layer) of the stack 132 and enters the workpiece 104, the vibration assisted drilling process is enabled and begins using values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136. In one or more examples, when the full diameter of the cutting tool 124 enters the layer of the metallic material 136, the vibration assisted drilling process begins and a second exterior peck process begins. The cutting surface 126 is retracted at least once along the feed axis 110 to the second exterior peck retract location 258. In one or more examples, the second exterior peck retract location 258 is set at 0.5 inch outside the workpiece surface 220. In one or more examples, routing and dispensing of the lubricant 122 is enabled during the metallic material drilling process.

The metallic material drilling process continues as the cutting surface 126 is advanced along the feed axis 110 using the vibration assisted drilling parameters, including values for the NC axial feed rate 112 (IPR) and the surface speed 174 (SFM) and values for the oscillation rate 116, the oscillation amplitude 118, and the oscillation frequency 120 of the NC oscillating motion 114 set for drilling the metallic material 136 until reaching the fay interface 228 (e.g., shown in Fig. 34).

Fig. 34 illustrates an example of the first breakout process where the cutting surface 126 is passing through the fay interface 228 of the stack 132. In one or more examples, when the cutting surface 126 reaches the fay interface 228 of the stack 132, a third exterior peck process begins. The cutting surface 126 is retracted at least once along the feed axis 110 to the second exterior peck retract location 258. In one or more examples, routing and dispensing of the lubricant 122 is enabled during the first breakout process.

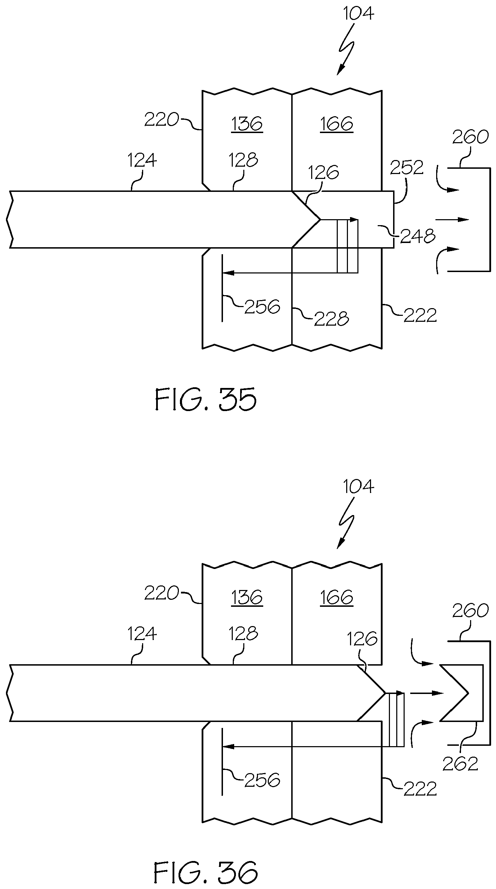

Fig. 35 illustrates an example of initiation of the non-metallic material (e.g., composite material) drilling process. In one or more examples, when the full diameter of the cutting tool 124 enters the non-metallic material 166 (e.g., layer) of the stack 132, the conventional drilling process begins using values for the NC axial feed rate 112 (IPR) and the surface speed 174 (SFM) set for drilling the non-metallic material 166. In one or more examples, the NC axial feed rate 112 (IPR) during the non-metallic material drilling process is continuous and constant. In one or more examples, when the cutting surface 126 enters the non-metallic material 166, an interior peck process begins. The cutting surface 126 is retracted at least once along the feed axis 110 to the interior peck retract location 256. In one or more examples, the interior peck retract location 256 is set at 0.150 inch inside the workpiece surface 220. In one or more examples, routing and dispensing of the lubricant 122 is disabled during the non-metallic material drilling process.

The non-metallic material drilling process continues as the cutting surface 126 is advanced along the feed axis 110 using the conventional drilling parameters, including values for the NC axial feed rate 112 (IPR) and the surface speed 174 (SFM) set for drilling the non-metallic material 166 until reaching the backside surface 222 (e.g., shown in Fig. 36).

In one or more examples, the pressure foot vacuum 260 is enabled during the non-metallic material drilling process.

Fig. 36 illustrates an example of the second breakout process where the cutting surface 126 is passing through the backside surface 222 of the workpiece 104 and pushing out the tack debris 262 (e.g., remnants of the tack fastener 248). When the cutting surface 126 reaches the backside surface 222 and exits the stack 132, a second interior retract process is performed. The cutting surface 126 is retracted at least once along the feed axis 110 to the interior peck retract location 256. The retract process eliminates packing of the chip debris 158. The conventional drilling parameters of the non-metallic material drilling process continue through the second breakout process. In one or more examples, routing and dispensing of the lubricant 122 is enabled during the second breakout process.

In one or more examples, the pressure foot vacuum 260 is enabled during the second breakout process to extract the tack debris 262 exiting the workpiece 104.

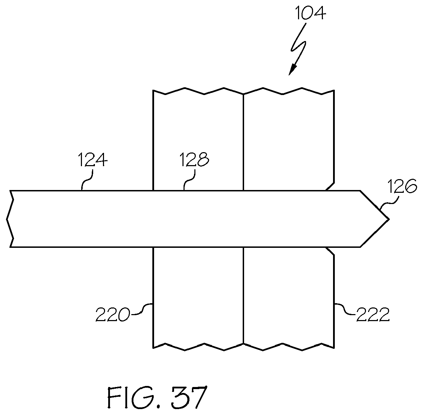

Fig. 37 illustrates an example of the rapid advance to chamfer process. In one or more examples, when the full diameter of the cutting tool 124 exits the stack 132, the cutting surface 126 rapidly advances to the chamfer position 244 to begin the chamfer process. In one or more examples, routing and dispensing of the lubricant 122 is disabled during the chamfer process. In one or more examples, the pressure foot vacuum 260 is disabled during the second breakout process to extract the tack debris 262 exiting the workpiece 104.

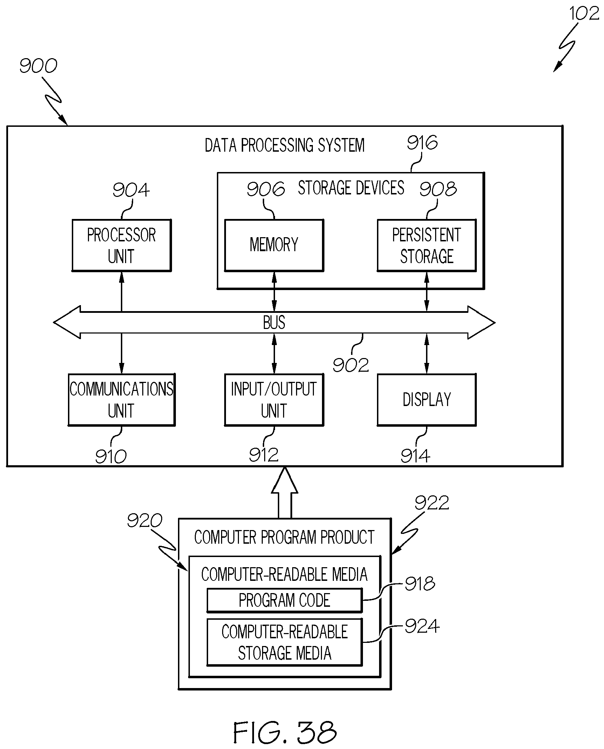

Referring to Fig. 1 and to Fig. 38, by way of examples, the present disclosure is also directed to the controller 102 for the automated drilling system 100. The controller 102 programmed with instructions 138 that, when executed by the controller 102, causes the controller 102 to perform operations. In one or more examples, the controller 102 includes a processor 904 programmed with the instructions 138 that, when executed by the processor 904, causes the processor 904 to perform the operations. The operations include the example implementations of the automated drilling method 1000 as described herein and illustrated in Figs. 1-37, such as advancing the power drill 106 along the feed axis 110 according to the numerically controlled axial feed rate 112. The operations also include inducing the numerically controlled oscillating motion 114 superimposed over the numerically controlled axial feed rate 112.

Referring to Fig. 38, by way of examples, the present disclosure is also directed to a computer program product 922. The computer program product 922 includes a non-transitory computer-readable medium 920 including program code 918 that, when executed by one or more processors 904, causes the one or more processors 904 to perform operations. The operations include the example implementations of the automated drilling method 1000 as described herein and illustrated in Figs. 1-37, such as advancing the power drill 106 along the feed axis 110 according to the numerically controlled axial feed rate 112. The operations also include inducing the numerically controlled oscillating motion 114 superimposed over the numerically controlled axial feed rate 112.

Referring to Fig. 1, in one or more examples, the automated drilling system 100 is implemented using software, hardware, firmware, or a combination thereof. When software is used, the operations performed by the automated drilling system 100 are implemented using, for example, without limitation, program code configured to run on a processor unit. When firmware is used, the operations performed by the system 100 may be implemented using, for example, without limitation, program code and data and stored in persistent memory to run on a processor unit.

When hardware is employed, the hardware may include one or more circuits that operate to perform the operations performed by the system 100. Depending on the implementation, the hardware may take the form of a circuit system, an integrated circuit, an application specific integrated circuit (ASIC), a programmable logic device, or some other suitable type of hardware device configured to perform any number of operations.

A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

Referring to Fig. 38, in one or more examples, the controller 102 (Fig. 1) includes or takes the form of a data processing system 900. In one or more examples, the data processing system 900 includes a communications framework 902, which provides communications between at least one processor 904, one or more storage devices 916, such as memory 906 and/or persistent storage 908, a communications unit 910, an input/output unit 912 (I/O unit), and a display 914. In this example, the communications framework 902 takes the form of a bus system.

The processor 904 serves to execute the instructions 138 (Fig. 1) for software that can be loaded into the memory 906. In one or more examples, the processor 904 is a number of processor units, a multi-processor core, or some other type of processor, depending on the particular implementation.

The memory 906 and the persistent storage 908 are examples of the storage devices 916. A storage device is any piece of hardware that is capable of storing information, such as, for example, without limitation, at least one of data, program code in functional form, or other suitable information either on a temporary basis, a permanent basis, or both on a temporary basis and a permanent basis. The storage devices 916 may also be referred to as computer readable storage devices in one or more examples. The memory 906 is, for example, a random-access memory or any other suitable volatile or non-volatile storage device. The persistent storage 908 can take various forms, depending on the particular implementation.

For example, the persistent storage 908 contains one or more components or devices. For example, the persistent storage 908 is a hard drive, a solid-state hard drive, a flash memory, a rewritable optical disk, a rewritable magnetic tape, or some combination of the above. The media used by the persistent storage 908 also can be removable. For example, a removable hard drive can be used for the persistent storage 908.

The communications unit 910 provides for communications with other systems or devices, such as the tool drive 108, the power drill 106, or other computer systems. In one or more examples, the communications unit 910 is a network interface card.

Input/output unit 912 allows for input and output of data with other devices that can be connected to the data processing system 900. As an example, the input/output unit 912 provides a connection for user input through at least one of a keyboard, a mouse, or some other suitable input device. Further, the input/output unit 912 can send output to a printer. The display 914 provides a mechanism to display information to a user..

Instructions (e.g., instructions 138) for at least one of the operating system, applications, or programs can be located in the storage devices 916, which are in communication with the processor 904 through the communications framework 902. The processes of the various examples and operations described herein can be performed by the processor 904 using computer-implemented instructions, which can be located in a memory, such as the memory 906.

The instructions 138 are referred to as program code, computer usable program code, or computer readable program code that can be read and executed by a processor of the processor 904. The program code 918 in the different examples can be embodied on different physical or computer readable storage media, such as the memory 906 or the persistent storage 908.

In one or more examples, the program code 918 is located in a functional form on computer readable media 920 that is selectively removable and can be loaded onto or transferred to the data processing system 900 for execution by the processor 904. In one or more examples, the program code 918 and computer readable media 920 form the computer program product 922. In one or more examples, the computer readable media 920 is computer readable storage media 924.

In one or more examples, the computer readable storage media 924 is a physical or tangible storage device used to store the program code 918 rather than a medium that propagates or transmits the program code 918.

Alternatively, the program code 918 can be transferred to the data processing system 900 using a computer readable signal media. The computer readable signal media can be, for example, a propagated data signal containing the program code 918. For example, the computer readable signal media can be at least one of an electromagnetic signal, an optical signal, or any other suitable type of signal. These signals can be transmitted over at least one of communications links, such as wireless communications links, optical fiber cable, coaxial cable, a wire, or any other suitable type of communications link.

The different components illustrated for data processing system 900 are not meant to provide architectural limitations to the manner in which different examples can be implemented. The different examples can be implemented in a data processing system including components in addition to or in place of those illustrated for the data processing system 900. Other components shown in Fig. 38 can be varied from the examples shown. The different examples can be implemented using any hardware device or system capable of running the program code 918.

Additionally, various components of the controller 102 and/or the data processing system 900 may be described as modules. For the purpose of the present disclosure, the term "module" includes hardware, software or a combination of hardware and software. As an example, a module can include one or more circuits configured to perform or execute the described functions or operations of the executed processes described herein (e.g., the method 1000). As another example, a module includes a processor, a storage device (e.g., a memory), and computer-readable storage medium having instructions that, when executed by the processor causes the processor to perform or execute the described functions and operations. In one or more examples, a module takes the form of the program code 918 and the computer readable media 920 together forming the computer program product 922.

Referring now to Figs. 39 and 40, examples of the automated drilling system 100 and the automated drilling method 1000 described herein, may be related to, or used in the context of, an aircraft manufacturing and service method 1100, as shown in the flow diagram of Fig. 39 and the aircraft 1200, as schematically illustrated in Fig. 40. For example, the aircraft 1200 and/or the aircraft production and service method 1100 may include the workpiece 104 (Fig. 1) that is machined using the automated drilling system 100 and/or according to the automated drilling method 1000.

Referring to Fig. 40, which illustrates an example of the aircraft 1200. The aircraft 1200 includes an airframe 1202 having an interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to an airframe 1202 of the aircraft 1200, such as for example, flaps, spoilers, ailerons, slats, rudders, elevators, and trim tabs. In yet other examples, the onboard systems 1204 also includes one or more other systems, such as, but not limited to, communications systems, avionics systems, software distribution systems, network communications systems, passenger information/entertainment systems, guidance systems, radar systems, weapons systems, and the like. The aircraft 1200 may include various other structures made of a combination of metallic materials 136 and non-metallic materials 166 (e.g., composite material 134).

Referring to Fig. 40, during pre-production of the aircraft 1200, the manufacturing and service method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the manufacturing and service method 1100 illustrated in Fig. 39 may be performed or carried out by a system integrator, a third party, and/or an operator (e.g., a customer). For the purposes of this description, a system integrator may include, without limitation, any number of spacecraft manufacturers and major-system subcontractors; a third party may include, without limitation, any number of vendors, subcontractors, and suppliers; and an operator may be an airline, leasing company, military entity, service organization, and so on.

Examples of the automated drilling system 100 and the automated drilling method 1000 shown and described herein, may be employed during any one or more of the stages of the manufacturing and service method 1100 shown in the flow diagram illustrated by Fig. 39. In an example, drilling holes 128 through the workpiece 104 using the automated drilling system 100 and/or according to the method 1000 may form a portion of component and subassembly manufacturing (block 1106) and/or system integration (block 1108). Further, workpieces 104 having holes 128 drilled using the automated drilling system 100 and/or according to the automated drilling method 1000 may be implemented in a manner similar to components or subassemblies prepared while the aircraft 1200 is in service (block 1112). Also, workpieces 104 having holes 128 drilled using the automated drilling system 100 and/or according to the automated drilling method 1000 may be utilized during system integration (block 1108) and certification and delivery (block 1110). Similarly, workpieces 104 having holes 128 drilled using the automated drilling system 100 and/or according to the automated drilling method 1000 may be utilized, for example and without limitation, while the aircraft 1200 is in service (block 1112) and during maintenance and service (block 1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

As used herein, the phrase "along an axis" such as in reference to position along an axis, movement along an axis, and similar phrases, refers to an item being positioned or moving at least approximately parallel to or coincident with the axis.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of' may be, for example, without limitation, two of item A, one of item B, and ten of item C; four of item B and seven of item C; and other suitable combinations. As used herein, the term "and/or" and the "j" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represent a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1-4, 6-38 and 40, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-4, 6-38 and 40, referred to above, need be included in every example and not all elements, features, and/or components described herein are necessarily depicted in each illustrative example. Accordingly, some of the elements, features, and/or components described and illustrated in Figs. 1-4, 6-38 and 40 may be combined in various ways without the need to include other features described and illustrated in Figs. 1-4, 6-38 and 40, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1-4, 6-38 and 40, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-4, 6-38 and 40, and such elements, features, and/or components may not be discussed in detail herein with reference to each of Figs. 1-4, 6-38 and 40. Similarly, all elements, features, and/or components may not be labeled in each of Figs. 1-4, 6-38 and 40, but reference numerals associated therewith may be utilized herein for consistency.

In Figs. 5 and 39, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 5 and 39 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the automated drilling system 100, the automated drilling method 1000, the controller 102, and the computer program product 922 have been shown and described, modifications may occur to those skilled in the art upon reading the specification. The present application includes such modifications and is limited only by the scope of the claims.

The description includes the following clauses:
1. An automated drilling method comprising steps of:
   drilling a workpiece;
   advancing along a feed axis according to a numerically controlled axial feed rate; and
   inducing a numerically controlled oscillating motion superimposed over the numerically controlled axial feed rate .
2. The automated drilling method of Clause 1, wherein:
   the step of advancing comprises actuating a tool drive to continuously extend a power drill along the feed axis ; and
   the step of inducing comprises actuating the tool drive to cyclically retract and extend the power drill along the feed axis.
3. The automated drilling method of Clause 1 or Clause 2, wherein the numerically controlled oscillating motion comprises an oscillation rate of between approximately 1 oscillation per revolution and approximately 2 oscillations per revolution.
4. The automated drilling method of Clause 3, wherein the numerically controlled oscillating motion comprises the oscillation rate of approximately 1.5 oscillations per revolution.
5. The automated drilling method of Clause 3 or Clause 4, further comprising increasing the oscillation rate to decrease a size of a debris chip cut during the drilling.
6. The automated drilling method of any of Clauses 3 to 4, further comprising decreasing the oscillation rate to decrease a size of a debris chip cut during the drilling.
7. The automated drilling method of any preceding Clause, wherein the numerically controlled oscillating motion comprises an amplitude of approximately 0.004 inch.
8. The automated drilling method of any preceding Clause, wherein the numerically controlled oscillating motion comprises a frequency of approximately 27 Hertz.
9. The automated drilling method of any preceding Clause, further comprising dispensing a lubricant to a cutting surface of a cutting tool while at least a portion of the cutting tool is located within a hole being drilled in the workpiece
10. The automated drilling method of Clause 9, wherein dispensing the lubricant comprises internally routing the lubricant to the cutting surface of the cutting tool.
11. The automated drilling method of any preceding Clause, wherein inducing the numerically controlled oscillating motion is selectively activated and deactivated based on a material composition of the workpiece.
12. The automated drilling method of any preceding Clause, wherein:
   the workpiece comprises a stack of a composite material and a metallic material; and
   inducing the numerically controlled oscillating motion is performed while drilling the metallic material.
12A. The automated drilling method of any preceding clause, wherein the method is computer-implemented.
13. An automated drilling system comprising:
   a power drill;
   a tool drive coupled to the power drill and configured to move the power drill along a feed axis; and
   a controller programmed with instructions that cause the controller to:
      advance the power drill along the feed axis according to a numerically controlled axial feed rate; and
      induce a numerically controlled oscillating motion superimposed over the numerically controlled axial feed rate.
14. The automated drilling system of Clause 13, wherein the numerically controlled oscillating motion comprises an oscillation rate of between approximately 1 oscillation per revolution and approximately 2 oscillations per revolution.
15. The automated drilling system of Clause 14, wherein the numerically controlled oscillating motion comprises the oscillation rate of approximately 1.5 oscillations per revolution.
16. The automated drilling system of any of Clause 13 to 15, wherein:
   the numerically controlled oscillating motion comprises an amplitude of approximately 0.004 inch; and
   the numerically controlled oscillating motion comprises a frequency of approximately 27 Hertz.
17. The automated drilling system of any of Clauses 13 to 16, wherein the instructions cause the controller to cyclically retract and extend the power drill along the feed axis while continuously extending the power drill along the feed axis.
18. The automated drilling system of any of Clauses 13 to 17, wherein the power drill is configured to internally route a lubricant to a cutting surface of a cutting tool.
19. The automated drilling system of any of Clauses 13 to 18, wherein the instructions further cause the controller to selectively activate and deactivate the numerically controlled oscillating motion based on a material composition of a workpiece.
20. A controller for an automated drilling system, the controller programmed with instructions that, when executed by the controller , causes the controller to perform operations comprising:
   advancing a power drill along a feed axis according to a numerically controlled axial feed rate ; and
   inducing a numerically controlled oscillating motion superimposed over the numerically controlled axial feed rate .
21. The controller of Clause 20, wherein the numerically controlled oscillating motion comprises an oscillation rate of between approximately 1 oscillation per revolution and approximately 2 oscillations per revolution.
22. The controller of Clause 21, wherein the numerically controlled oscillating motion comprises the oscillation rate of approximately 1.5 oscillations per revolution.
23. The controller of Clause 22, wherein:
   the numerically controlled oscillating motion comprises an amplitude of approximately 0.004 inch; and
   the numerically controlled oscillating motion comprises a frequency of approximately 27 Hertz.
24. The controller of any of Clauses 20 to 23, wherein the instructions cause the controller to cyclically retract and extend the power drill along the feed axis while continuously extending the power drill along the feed axis .
25. The controller of any of Clauses 20 to 24, wherein the instructions further cause the controller to selectively activate and deactivate the numerically controlled oscillating motion based on a material composition of a workpiece.

## Claims

1. An automated drilling method (1000) comprising steps of:
drilling a workpiece (104);
advancing along a feed axis (110) according to a numerically controlled axial feed rate (112); and
inducing a numerically controlled oscillating motion (114) superimposed over the numerically controlled axial feed rate (112).

2. The automated drilling method (1000) of Claim 1, wherein:
the step of advancing comprises actuating a tool drive (108) to continuously extend a power drill (106) along the feed axis (110); and
the step of inducing comprises actuating the tool drive (108) to cyclically retract and extend the power drill (106) along the feed axis (110).

3. The automated drilling method (1000) of Claim 1 or Claim 2, wherein the numerically controlled oscillating motion (114) comprises an oscillation rate (118) of between approximately 1 oscillation per revolution and approximately 2 oscillations per revolution.

4. The automated drilling method (1000) of Claim 3, wherein the numerically controlled oscillating motion (114) comprises the oscillation rate (116) of approximately 1.5 oscillations per revolution.

5. The automated drilling method (1000) of Claim 3 or Claim 4, further comprising increasing the oscillation rate (116) to decrease a size of a debris chip cut during the drilling.

6. The automated drilling method (1000) of any of Claims 3 to 5, further comprising decreasing the oscillation rate (116) to decrease a size of a debris chip cut during the drilling.

7. The automated drilling method (1000) of any preceding Claim, wherein the numerically controlled oscillating motion (114) comprises an amplitude (118) of approximately 0.004 inch.

8. The automated drilling method (1000) of any preceding Claim, wherein the numerically controlled oscillating motion (114) comprises a frequency (120) of approximately 27 Hertz.

9. The automated drilling method (1000) of any preceding Claim, further comprising dispensing a lubricant (122) to a cutting surface (126) of a cutting tool (124) while at least a portion of the cutting tool (124) is located within a hole (128) being drilled in the workpiece (104), optionally,, wherein dispensing the lubricant (122) comprises internally routing the lubricant (122) to the cutting surface (126) of the cutting tool (124).

10. The automated drilling method (1000) of any preceding Claim, wherein inducing the numerically controlled oscillating motion (114) is selectively activated and deactivated based on a material composition (130) of the workpiece (104).

11. The automated drilling method (1000) of any preceding Claim, wherein:
the workpiece (104) comprises a stack (132) of a composite material (134) and a metallic material (136); and
inducing the numerically controlled oscillating motion (114) is performed while drilling the metallic material (136).

12. An automated drilling system (100) comprising:
a power drill (106);
a tool drive (108) coupled to the power drill (106) and configured to move the power drill (106) along a feed axis (110); and
a controller (102) programmed with instructions (138) that cause the controller (102) to:
advance the power drill (106) along the feed axis (110) according to a numerically controlled axial feed rate (112); and
induce a numerically controlled oscillating motion (114) superimposed over the numerically controlled axial feed rate (112).

13. The automated drilling system (100) of Claim 12, wherein the numerically controlled oscillating motion (114) comprises an oscillation rate (118) of between approximately 1 oscillation per revolution and approximately 2 oscillations per revolution, optionally, wherein the numerically controlled oscillating motion (114) comprises the oscillation rate (116) of approximately 1.5 oscillations per revolution.

14. The automated drilling system (100) of Claim 12 or claim 13, wherein:
the numerically controlled oscillating motion (114) comprises an amplitude (118) of approximately 0.004 inch; and
the numerically controlled oscillating motion (114) comprises a frequency (120) of approximately 27 Hertz, and/or, wherein the instructions (138) cause the controller (102) to cyclically retract and extend the power drill (106) along the feed axis (110) while continuously extending the power drill (106) along the feed axis (110), and/or, wherein the power drill (106) is configured to internally route a lubricant (122) to a cutting surface (126) of a cutting tool (124, and/or, wherein the instructions (138) further cause the controller (102) to selectively activate and deactivate the numerically controlled oscillating motion (114) based on a material composition (130) of a workpiece (104).

15. A controller (102) for an automated drilling system (100), the controller (102) programmed with instructions (138) that, when executed by the controller (102), causes the controller (102) to perform operations comprising:
advancing a power drill (106) along a feed axis (110) according to a numerically controlled axial feed rate (112); and
inducing a numerically controlled oscillating motion (114) superimposed over the numerically controlled axial feed rate (112).
